# EUROPEAN PATENT APPLICATION

(11) **EP 4 742 613 A1**
(43) Date of publication of application: **13.05.2026**
(21) Application number: 25215343.2
(22) Date of filing: 12.11.2025
(51) Int. Cl.: H04L 41/16, H04L 43/028, H04L 43/065, H04L 43/20

(54) **SELF-LEARNING MODEL FOR DEDUPLICATING 5G SERVICE-BASED INTERFACE (SBI) PACKETS**

(30) Priority: 12.11.2024 US 202463719308 P; 14.05.2025 US 202563805358 P
(71) Applicant: TC France S.A.S., 35136 Saint-Jacques-de-la-Lande (FR)
(72) Inventor: ARTOLA CABALLERO, Juan Roberto, Madrid (ES); CISSE, Manuel, Chanteloup (FR)
(74) Representative: Dehns

(57) **Abstract**

Systems and methods for deduplicating data packets in a telecommunication network monitoring system (100) include receiving (802) a data packet from a monitoring data source (110) in a telecommunication network; determining (804), for the received data packet, a set of deduplication parameters including at least a consumer Network Function identifier (NFID), a producer NFID, a Network Function (NF) type, and a view associated with the data packet; analyzing (806) the data packet by comparing the deduplication parameters against entries in a deduplication hash table (150); and performing (810) an action based on the analyzing, the action comprising processing the data packet or discarding the data packet.

## Description

### CROSS-REFERENCE TO RELATED APPLICATION

This application claims the benefit of U.S. Provisional Patent Application No. 63/719,308, filed November 12, 2024 (DAS Code 6868), and U.S. Provisional Patent Application No. 63/805,358, filed May 14, 2025 (DAS Code 7162).

### FIELD OF THE DISCLOSURE

The present disclosure relates generally to data packet deduplication. More particularly, the present disclosure relates to systems and methods for deduplicating data packets captured in monitoring telecommunication networks.

### BACKGROUND OF THE DISCLOSURE

In modern telecommunication networks, particularly with the advent of 5G and cloud-native network architectures, the need for robust, real-time monitoring of signaling and traffic flows has become increasingly critical. Network monitoring systems are used to collect, analyze, and interpret signaling data for various purposes including performance analysis, anomaly detection, troubleshooting, security, and subscriber experience optimization. Traditional network monitoring approaches often rely on physical port mirroring or packet brokers to capture traffic. However, with the virtualization of Network Functions (NFs) and the shift toward Service-Based Architectures (SBA) in the 5G Core (5GC), monitoring systems increasingly depend on virtualized taps (vTaps) and packet streaming sources embedded within virtual network elements. These monitoring sources provide different views of network traffic, such as from the perspective of the consumer NF, producer NF, or intermediate proxies.

Due to the distributed nature of these monitoring points and the complexity of interactions between NFs, it is common for the same signaling message or data packet to be captured multiple times across different views or sources. This leads to data duplication, which can negatively impact the performance and accuracy of monitoring tools. Duplicate packets consume additional bandwidth, increase processing load, and result in misleading analytical insights if not properly managed. While some conventional deduplication techniques exist, such as simple byte-by-byte comparison or hashing, they are typically insufficient in this new context, particularly when the packets are not exact duplicates in terms of payload or metadata due to transformations or protocol behavior at different capture points.

### BRIEF SUMMARY OF THE DISCLOSURE

The present invention introduces systems and methods for deduplicating data packets captured from various monitoring sources in a virtualized telecommunication network. The invention is particularly suited for use in 5G Core networks and other service-based architectures where multiple virtual monitoring points provide overlapping views of the same network communication.

The deduplication system receives data packets from one or more monitoring sources, each of which may include vTaps, packet streaming interfaces, or mirrored feeds. Each packet is analyzed to determine key deduplication parameters including the consumer Network Function ID (NFID), producer NFID, NF type, and the view (e.g., consumer, producer, proxy-ingress, proxy-egress, mirror). These parameters are either extracted from a custom deduplication header included in the packet or inferred through a discovery model that leverages metadata about the monitoring sources and the traffic itself.

Once the relevant parameters are identified, the deduplication system consults a deduplication hash table, which maps parameter combinations to actions, either to process the packet or discard it as a duplicate. If a new combination is encountered, a self-learning model updates the hash table and populates an NFID table used to dynamically identify the origin and role of each NF in the traffic flow. The deduplication process is guided by configurable policies, including default view prioritization (e.g., prioritizing consumer views), overrides for specific NF type combinations, and a GET_ALL mode for retaining all packets where necessary.

Through this intelligent, adaptive deduplication method, the system reduces processing overhead, preserves monitoring accuracy, and maintains the integrity of network analytics. It enables operators to confidently deploy scalable, efficient, and highly configurable monitoring systems within virtualized 5G environments and beyond.

### BRIEF DESCRIPTION OF THE DRAWINGS

The present disclosure is detailed through various drawings, where like components or steps are indicated by identical reference numbers for clarity and consistency.
FIG. 1 is a diagram of a deduplication system.
FIG. 2 is a visualization of a deduplication table used in the proposed deduplication process.
FIG. 3 is a flowchart outlining the process followed by the deduplication system.
FIG. 4 is a visualization of data packet parameters.
FIGS. 5A and 5B are flowcharts of a self-learning process.
FIG. 6 is a flowchart of a deduplication process.
FIG. 7 is a diagram visualizing deduplication across edge components.
FIG. 8 is a flowchart of a process for deduplicating data packets in a telecommunication network monitoring system.

### DETAILED DESCRIPTION OF THE DISCLOSURE

In the field of telecommunications, data traffic monitoring plays a critical role in enabling network administrators to understand how data is transmitted across networks, identify potential issues, and ensure optimal performance. This process involves the continuous observation and analysis of data packets as they traverse various nodes within a network. During this transmission, it is not uncommon for duplicate packets to be generated due to factors such as re-transmissions, network errors, or certain protocol behaviors. If left unaddressed, these duplicate packets can lead to several complications, including the unnecessary consumption of bandwidth, network congestion, and inaccuracies in data analysis, particularly in the context of traffic monitoring.

To counter these issues, deduplication is employed as a vital mechanism for preserving the integrity and efficiency of network operations. Deduplication in data traffic monitoring involves identifying and removing redundant data packets transmitted over the network. This process is crucial for ensuring the accuracy of analytical insights by preventing skewed results caused by duplicated data, thereby offering a more accurate and reliable understanding of network usage and performance.

The deduplication process typically begins by identifying each packet using unique attributes such as sequence numbers or a combination of source and destination addresses along with timestamps. As new packets are received, they are compared against previously received ones. When a packet is recognized as a duplicate, it is discarded, ensuring that only one instance of each unique packet is retained for analysis.

With the advent of the 5G Core (5GC) and the increasing use of encrypted communication within telecommunication cloud environments, particularly for Service-Based Interfaces (SBIs), there has been a notable transition away from traditional monitoring methods that relied on mirrored traffic. Instead, networks are now adopting virtual tapping (vTap) and packet streaming technologies. In these setups, virtual machines or Network Functions (NFs) generate their own data feeds, providing insights into the traffic flowing between them. These feeds are mirrored and directed to monitoring tools for further analysis.

However, this shift introduces new challenges. The heterogeneous nature of data feeds from vTaps renders conventional deduplication techniques, which rely on detecting exact packet replicas captured at different mirroring points, largely ineffective. Additionally, in many deployments, monitoring remains partially reliant on port mirroring, while some NFs produce overlapping data feeds. This coexistence of methods can lead to partial duplication of traffic data, complicating the deduplication process even further.

As such, there remains a pressing need for a deduplication solution tailored to the realities of virtualized environments. This solution must be practical, straightforward to implement, and should not impose heavy requirements on data sources. Above all, it should be easy to operate, ensuring effective deduplication within the complex and evolving landscape of 5G and telecommunication cloud infrastructure.

The traditional systems and methods for deduplication introduce a variety of techniques aimed at efficiently identifying and eliminating redundant data packets, one of which being hashing. Hashing is a process that involves applying a hash function to the contents of a data packet to generate a unique hash value or code. This hash value serves as a digital fingerprint of the packet's contents, such that if two packets yield the same hash value, they are presumed to be duplicates.

The new method of deduplication covered in this disclosure does not rely on hashing the contents of the full packets received. The overall strategy relies on identifying what are the Network Functions that are exchanging such packet, identify what are the different sources that are providing data for the exchange between such Network Functions, identify what is the viewpoint that each of the datasources is providing for such exchange and, finally, based on the configuration directives select the desired source of the packets that will be processed and deduplicate/discard the packets provided by other non preferred sources.

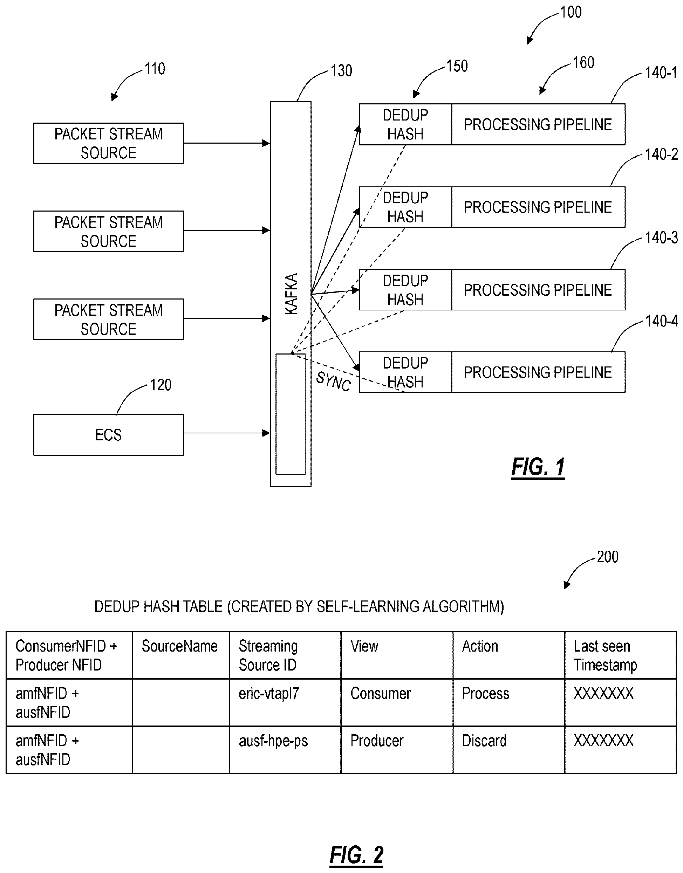

The proposed deduplication system 100, as illustrated in FIG. 1, provides an efficient and scalable method for eliminating duplicate data packets within a distributed monitoring or probe system architecture. The system includes a plurality of packet stream sources 110, which may represent virtual taps (vTaps), packet streaming endpoints, or mirrored traffic sources configured to capture signaling data from a telecommunication network. Each packet stream source 110 delivers network data to an Edge Capture System (ECS) 120, which performs initial preprocessing and forwarding of the captured packets to a message bus such as Kafka 130.

Kafka 130 serves as a message distribution layer that conveys packet data and deduplication updates between distributed frontend components, referred to as Frontends (FEs) 140-1, 140-2, and 140-3 (collectively "frontend processing components 140"). Each frontend component 140 incorporates a deduplication hash 150 and an associated processing pipeline 160. The deduplication hash 150 includes a hashmap table augmented with a set of filtering rules and learning logic that allow for rapid identification and elimination of duplicate packets. The deduplication hash 150 may be continuously synchronized across frontends through Kafka 130, thereby ensuring consistent deduplication state throughout the system.

During operation, packets received from packet stream sources 110 are delivered through Kafka 130 to each frontend 140. The frontend accesses its local deduplication hash 150 to determine whether a packet is unique or a duplicate. If a matching entry is found-based on deduplication parameters such as consumer and producer Network Function (NF) Identifiers-the packet is discarded prior to entering the processing pipeline 160. Otherwise, the packet is processed normally, and its deduplication parameters are recorded in the deduplication hash 150 for future reference. By performing deduplication at the earliest stage of the processing pipeline 160, redundant traffic is removed before further decoding, correlation, or enrichment occurs, significantly reducing computational overhead and preserving bandwidth across distributed monitoring components.

This architecture allows multiple packet stream sources 110, possibly capturing overlapping traffic views, to be intelligently managed by the deduplication system 100. Through coordination among the deduplication hashes 150 across frontends 140 and synchronization over Kafka 130, the system ensures that duplicate packets are filtered consistently throughout the network monitoring infrastructure. As a result, the deduplication system 100 enhances overall efficiency, scalability, and accuracy in large-scale, cloud-native, or 5G monitoring environments.

FIG. 2 provides a detailed illustration of the structure and functioning of a deduplication table 200 used in the proposed deduplication process. The table 200 is employed by the deduplication system to intelligently detect and eliminate redundant data packets within a telecommunication monitoring environment. The deduplication process enables efficient analysis of overlapping traffic captured from multiple monitoring sources-such as virtual taps (vTaps), packet streaming sources, and mirrored feeds-within a distributed 5G or cloud-native network.

Each entry in the deduplication table 200 corresponds to a unique pair of network entities engaged in communication, identified by a consumer NF identifier (NFID) and a producer NF identifier. Together, these NFIDs form a primary key that uniquely defines a monitored signaling exchange. For each such NF pair, the table further maintains context on the data source and the observation perspective (or "view") from which the packet was captured.

A source name identifies the control-plane edge or capture site that originated the data feed, while a streaming source identifier distinguishes among multiple packet feeds or Kafka topics received from that edge. The view field specifies the logical perspective associated with the packet and may take one of several values, including consumer, producer, proxy-ingress, proxy-egress, proxy (undifferentiated), both, or mirror. Each of these views corresponds to a distinct vantage point within the service-based interface topology.

An action field stores the result of the deduplication logic for that NF pair and view combination-indicating, for example, whether packets from that view should be processed or discarded. A last-seen timestamp records the most recent packet arrival for the corresponding rule entry, enabling timeout-based aging and dynamic rule updates during operation.

The deduplication process operates in two principal modes: a learning phase and a normal run-time phase. In the learning phase, the deduplication engine reacts to newly discovered NFIDs by dynamically constructing table entries and inferring missing metadata such as NF types, source identity, and capture perspective. During this phase, the system also detects overlapping data sources that provide duplicate traffic for the same NF pair and establishes rule priorities identifying which view or source should be retained. These initial observations are used to populate simplified filtering rules in the table 200.

During the normal run-time phase, incoming packets are matched against existing entries in the deduplication table 200. When a match is found, the corresponding action is applied immediately to either process or discard the packet. When no match exists, a new entry is created, triggering an update to the self-learning model. By applying these lookups at the earliest stage of the probe or frontend pipeline, the system avoids redundant decoding and significantly reduces CPU utilization.

The deduplication logic can be customized through configuration directives. A default view priority list defines the order in which views are preferred (for example, consumer > producer > proxy-ingress > proxy-egress > mirror). Additional configuration fields such as NF-type override parameters and GET-ALL rules allow administrators to specify exceptions-such as NF type pairs for which producer-side packets are prioritized, or traffic classes where all views should be preserved for correlation or enrichment.

To function correctly on a per-packet basis, the deduplication process relies on metadata that can be obtained in one of two ways. In one embodiment, the packet includes a deduplication header containing the necessary parameters-consumer NFID, producer NFID, view, and source ID. In alternative embodiments, this information is inferred through discovery processes that analyze signaling metadata to determine NF roles, classify NF types, and identify self versus peer NFIDs. Once this metadata is available, the deduplication table 200 efficiently applies its rules to every packet received, ensuring reliable filtering of duplicate traffic across virtualized, multi-source network environments.

Accordingly, the deduplication table 200 functions as a dynamic, self-maintained knowledge base for duplicate packet suppression. By combining runtime learning, adaptive rule prioritization, and cross-source coordination, the deduplication framework provides high-accuracy traffic analysis and improved scalability in complex, service-based network monitoring systems.

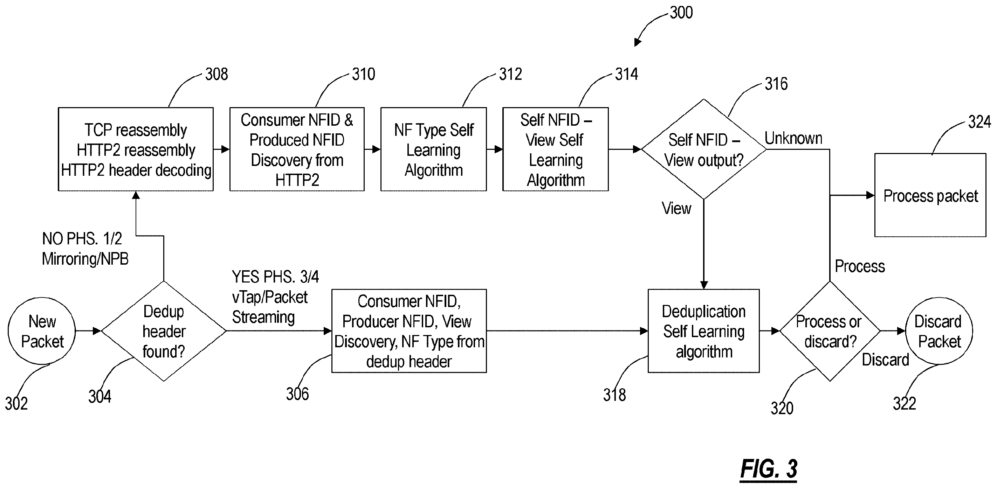

FIG. 3 presents a flowchart illustrating the overall process 300 followed by the deduplication system 100 for determining whether to process or discard incoming network packets. The process begins when a new packet 302 is received by the monitoring probe or frontend. The system first determines whether the packet includes a deduplication header 304 that contains deduplication parameters such as the consumer and producer Network Function Identifiers (NFIDs), Network Function (NF) type, and view (e.g., consumer, producer, proxy-ingress, proxy-egress, or mirror).

If the deduplication header 304 is present, the system proceeds directly to a parameter extraction step 306, where the consumer NFID, producer NFID, view, and NF type are retrieved from the header. If the deduplication header 304 is not present, the process 300 follows an alternate discovery branch beginning with TCP reassembly, HTTP/2 reassembly, and HTTP/2 header decoding 308 to reconstruct signaling information and extract the metadata required for deduplication.

From the decoded HTTP/2 headers, the system performs NFID discovery 310, identifying the consumer NFID and producer NFID, typically from the 3GPP SBI header field 3GPP-SBI-NF-Peer-Info. The discovered NFIDs are then analyzed by an NF type self-learning algorithm 312, which determines the NF type (e.g., AMF, SMF, PCF, SCP, SEPP, NRF, etc.) based on available metadata and prior learning.

The results of step 312 are provided to a self-NFID/view self-learning algorithm 314, which determines whether one or both NFIDs correspond to "Self" (locally monitored) functions and, from that information, derives a view output 316 indicating whether the packet represents a consumer, producer, or proxy perspective. If the view cannot yet be conclusively determined, the algorithm continues to update its internal NFID classification tables until sufficient traffic evidence is accumulated.

Once the parameters (consumer NFID, producer NFID, NF type, and view) have been established-either from the deduplication header 304 or through the discovery and learning processes-the deduplication engine executes the deduplication self-learning algorithm 318. The algorithm consults a deduplication hash table to determine if the combination of NFIDs and view has been previously observed and whether packets from that source and view should be processed or discarded.

The system then performs a decision step 320 to evaluate the deduplication action specified in the hash table. If the action indicates that the packet is a duplicate, the packet is sent to a discard operation 322. Conversely, if the rule indicates that the packet should be retained, the system forwards it to a process-packet operation 324, where normal decoding, correlation, and analytics are performed.

Through this structured workflow, the deduplication system 100 autonomously identifies, classifies, and filters redundant traffic captured from multiple monitoring sources. By leveraging the self-learning algorithms 312 and 314 in conjunction with the deduplication logic 318, the system dynamically adapts to evolving network conditions, ensuring efficient, accurate, and scalable packet analysis in high-volume, virtualized service-based network environments.

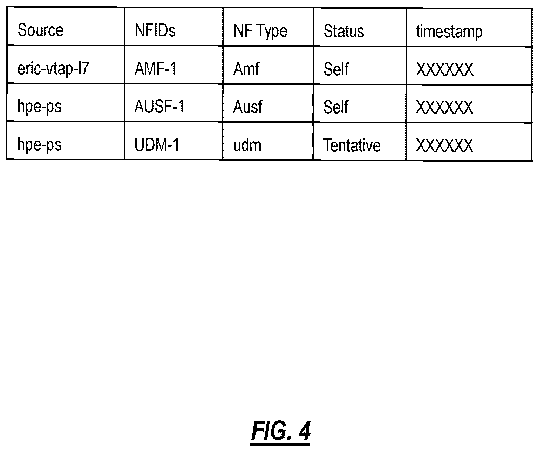

An essential component of this process is the identification of the self NFID and view, as illustrated in FIG. 4. This part of the process generates and maintains a "self NFIDs" table. This classification is based on information pre-configured in the deployment, where each packet streaming source or vTap is associated with a known list of NF types. Using this context, the system can determine the view of a packet:

Consumer View: if the consumer NFID is marked as "Self" and the producer NFID as "Peer."

Producer View: if the producer NFID is marked as "Self" and the consumer NFID as "Peer."

Both: if both NFIDs are recognized as "Self," indicating the packet originates from internal traffic between local NFs.

Proxy View: if both NFIDs are marked as "Peer," meaning the packet represents external traffic observed by the probe.

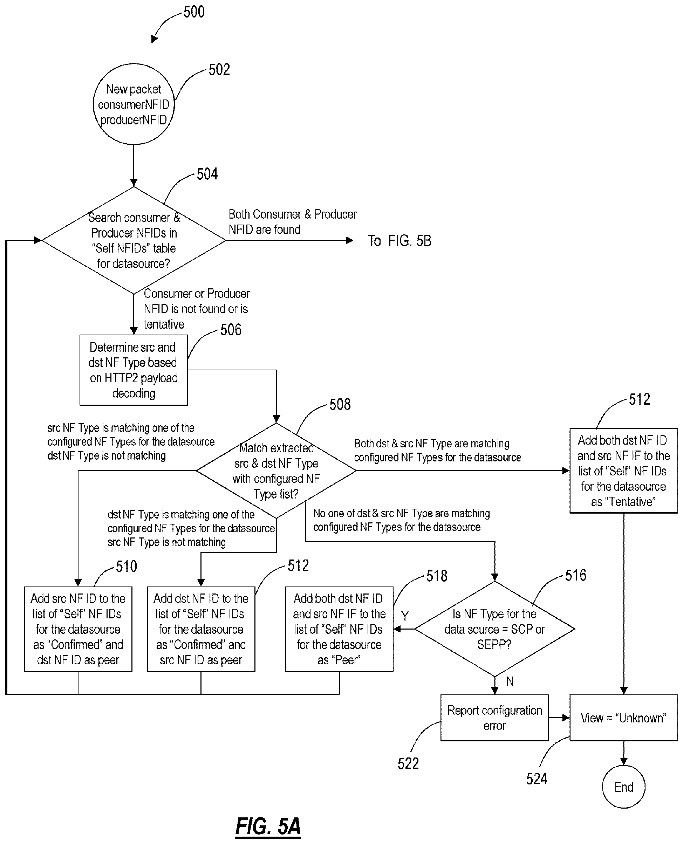

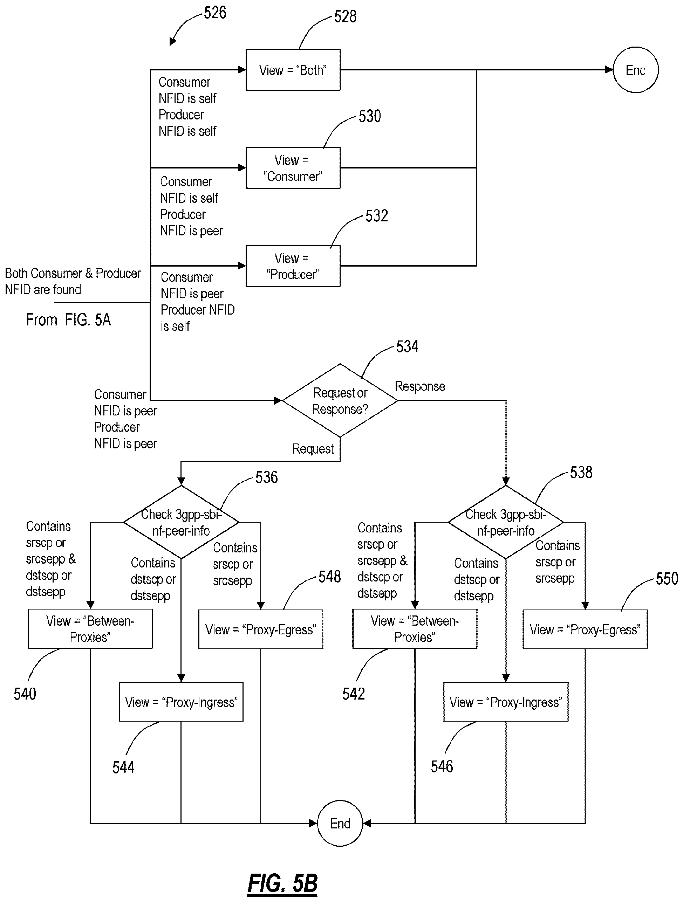

FIGS. 5A and 5B together illustrate a self-learning process 500 executed by the deduplication system 100 during its learning phase. The process 500 dynamically builds and refines a table of self-Network Function Identifiers (self-NFIDs) to determine whether each monitored Network Function (NF) is "Self" (local) or "Peer" (external) and to derive an appropriate packet view for deduplication purposes.

Referring first to FIG. 5A, the process 500 begins at step 502, where a new packet containing consumer and producer NFIDs is received. The system proceeds to step 504 to search for the consumer and producer NFIDs in an existing self-NFID table corresponding to the data source. If both NFIDs are already known, the process advances to the view-determination sequence of FIG. 5B.

If one or both NFIDs are not found, the system performs step 506, determining the source and destination NF types based on HTTP/2 payload decoding or signaling metadata. The extracted NF types are compared at decision step 508 with a configured list of expected NF types for the monitored data source. Based on the outcome of that comparison, the system executes one of several classification steps:

At step 510, when only the source NF type matches the configured list, the source NFID is added to the self-NFID table as confirmed Self, and the destination NFID is recorded as Peer.

At step 512, when only the destination NF type matches, the destination NFID is marked confirmed Self and the source NFID as Peer.

At step 514, when both NF types match, both NFIDs are added to the self-NFID table as Tentative Self entries pending further confirmation.

At step 516, when neither NF type matches, the process then advances to decision step, where the system determines whether the data source represents a proxy-type NF such as an SCP or SEPP. If so, the logic branches to step 518, in which both NFIDs are marked as peer; if the configuration is inconsistent or incomplete, a configuration error is reported at step 522, and the packet is assigned a view = "Unknown" at step 524 before ending the iteration.

For any entries added as Tentative Self at step 516, the system continues monitoring future traffic. If a tentative NFID later participates in exchanges with confirmed Peers, its status is upgraded to confirmed Self; otherwise, after a timeout interval, it is reclassified as Peer.

Turning now to FIG. 5B, the process 500 continues with determination of the packet view once the consumer and producer Network Function Identifiers (NFIDs) have been classified as either Self or Peer. The process begins at step 526, where the system evaluates the NFID roles to determine whether both NFIDs are classified as Self, both as Peer, or one as Self and the other as Peer.

If both NFIDs are classified as Self, the process proceeds to step 528, where the view is set to "Both." If the consumer NFID is Self and the producer NFID is Peer, the process proceeds to step 530 where the view is set to "Consumer." If the consumer NFID is Peer and the producer NFID is Self, the process proceeds to step 532 where the view is set to "Producer." If both are set to Peer, the process proceeds to step 534, which determines whether the packet corresponds to a request or a response message.

For request messages, the process advances to step 536, where the system assigns the view to "Consumer" if the consumer NFID is Self, or to "Producer" if the producer NFID is Self. For response messages, the process applies the opposite mapping at step 534, maintaining correct directional labeling regardless of signaling direction.

In steps 536 and 538, the system performs a check using the 3GPP-SBI-NF-Peer-Info header to determine message routing across proxy functions. When both proxy nodes are within the monitored domain, the process proceeds to step 540 or 542, where the view is set to "Between-Proxies."

If the packet is captured at the ingress of a proxy, the process continues to step 544 or 546, assigning the view to "Proxy-Ingress." Conversely, if the packet is captured at the egress of a proxy, the process advances to step 548 or 550, assigning the view to "Proxy-Egress." These distinctions ensure that traffic traversing Service Communication Proxy (SCP) or Security Edge Protection Proxy (SEPP) components is correctly identified for deduplication purposes.

Once the appropriate view has been determined, the process then terminates at step, completing the current learning cycle.

Through the execution of the steps shown in FIG. 5B, the deduplication system 100 accurately determines the view context-consumer, producer, proxy-ingress, proxy-egress, between-proxies, or both-for each monitored packet. This adaptive view assignment enables consistent and topology-aware deduplication across multiple monitoring sources, maintaining analytical integrity in distributed, service-based network environments.

Collectively, FIGS. 5A and 5B depict the self-learning algorithm implemented by the deduplication system 100. Through this algorithm, the system autonomously identifies relationships between network functions, classifies each as "Self" or "Peer," and determines the corresponding packet view-such as consumer, producer, proxy-ingress, proxy-egress, between-proxies, or both. By continually updating these classifications based on observed traffic, the self-learning algorithm enables adaptive, configuration-light deduplication that maintains accuracy across changing network topologies and heterogeneous monitoring sources.

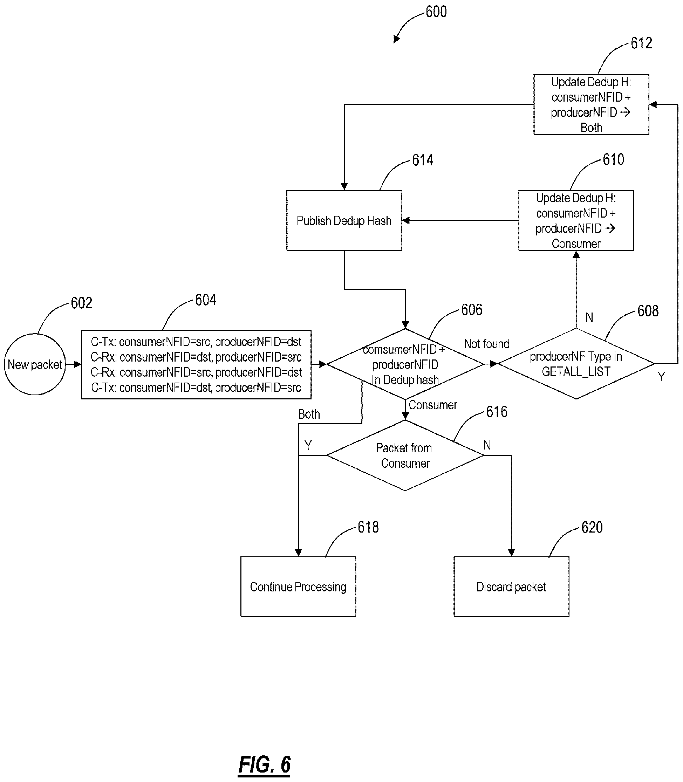

FIG. 6 is a flowchart of a deduplication process 600 performed by the deduplication system 100 for identifying and discarding duplicate packets during real-time traffic monitoring. The process 600 operates after the self-learning algorithm has established relationships between network functions and defined each packet's view context.

The process begins at step 602, where a new packet is received from a monitoring data source. Each packet includes parameters identifying the consumer and producer Network Function Identifiers (NFIDs) as determined by the discovery or self-learning stages. The packet is classified by transmission direction, such as Consumer-Transmit (C-Tx), Consumer-Receive (C-Rx), or Producer-Transmit (P-Tx), based on the source and destination NFIDs.

At decision step 604, the system checks whether the combination of consumer NFID and producer NFID is already present in the deduplication hash table. If no matching entry exists, the system proceeds to step 606, where it updates the deduplication hash table to register this new NFID pair and its associated view. Depending on the observed traffic pattern, the system performs one of several update operations:

In step 608, when packets are observed bidirectionally between the same NF pair, the deduplication hash is updated to map consumer NFID + producer NFID → Both.

In step 610, when packets are observed solely from the Consumer View, the deduplication hash is updated to map consumer NFID + producer NFID → Consumer.

Following either update, the process executes step 612 to publish the updated deduplication hash, synchronizing it with other monitoring front-ends through the centralized backend.

Returning to decision step 604, if a matching NFID pair is already present in the deduplication hash, the process advances to decision step 614, where the system determines whether the producer NF type is included in a GETALL_LIST configuration. When a match is found, the packet is retained for further analysis regardless of duplication potential. If not, the process proceeds to decision step 616, which evaluates whether the current packet originated from the Consumer View.

If the packet is determined to originate from the consumer, the process continues to step 618, where the packet is passed along to the downstream processing pipeline for decoding, correlation, or analytics. Conversely, if the packet originates from a non-preferred view (for example, the Producer View when the Consumer View is prioritized), the process executes step 620, in which the packet is discarded as a duplicate.

Through this iterative operation, the deduplication process 600 continuously refines and applies learned deduplication rules, ensuring that only the preferred or necessary view of each signaling exchange is processed. By maintaining an up-to-date deduplication hash and synchronizing it across distributed components, the system minimizes redundant traffic, reduces computational overhead, and preserves analytical consistency across multiple monitoring sources within a service-based network environment.

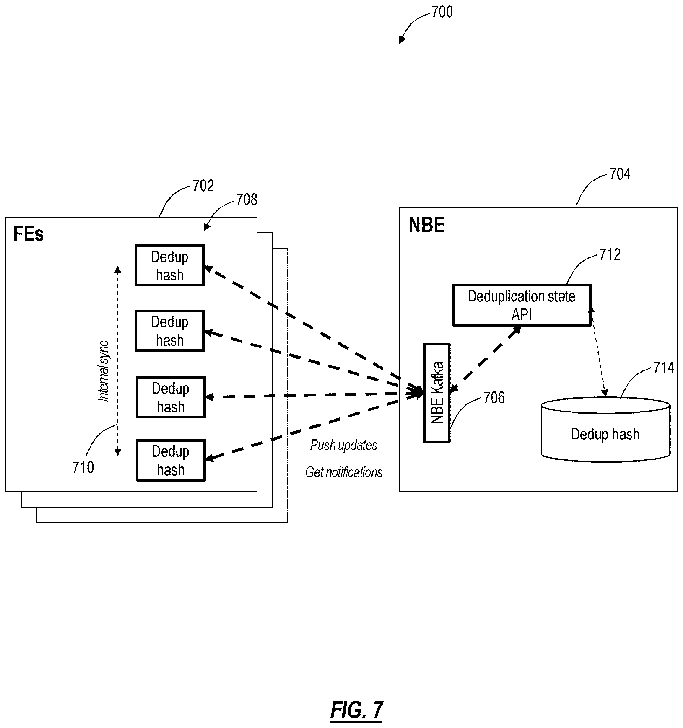

FIG. 7 is a system architecture 700 for deduplication synchronization across multiple distributed edge components. The figure shows how deduplication state information is maintained, synchronized, and shared between front-end (FE) components 702, a centralized backend environment 704, and a message-bus layer implemented through Kafka 706.

Each FE component 702 includes a local deduplication hash table 708, which stores the current deduplication state used to identify and filter duplicate packets in real-time processing. Multiple FE instances operate in parallel across geographically distributed edge sites, performing local deduplication based on the shared global deduplication logic. These FEs maintain internal synchronization 710, ensuring that deduplication updates applied at one edge node are reflected across peer nodes within the same site.

The deduplication state across all sites is coordinated through the Kafka 706 message bus, which provides a scalable publish-subscribe mechanism for state propagation between the FEs 702 and the centralized backend 704. When an FE component initializes or restarts, it retrieves the current deduplication state by reading the Kafka topic maintained at the backend 704. This ensures that every FE instance begins with the most recent deduplication rules and remains consistent with the overall monitoring network.

The backend 704 includes a deduplication state API 712 that provides an interface for reading, writing, and distributing deduplication updates to the persistent deduplication database 714. Whenever a new entry is added to a deduplication hash 708 or an existing entry is modified-typically as a result of the self-learning deduplication algorithm-the update is published to Kafka 706. Kafka propagates the update to the backend 704, which in turn synchronizes it with other FEs 702 via the existing notification model already employed for configuration or policy distribution, such as tracing or allowlist updates.

This design enables a scalable and resilient synchronization mechanism that allows distributed edge deduplication engines to remain aligned without excessive communication overhead or complex state-management logic. Because deduplication state is centrally persisted and automatically replicated, duplicate detection remains effective even when the same data packets are observed and processed at multiple edge sites.

Furthermore, updates to deduplication rules can be pushed not only to the FEs 702 but also to the originating data sources-such as vTaps or packet-streaming sensors-allowing these sources to perform pre-filtering at capture time. This early-stage elimination of duplicate packets reduces upstream bandwidth and compute load across both the edge and backend components.

The architecture 700 also supports flexible configuration through which operators can selectively override or disable deduplication for specific network functions or data sources. For instance, deduplication may be disabled for debugging, test scenarios, or specialized monitoring sessions that require full traffic retention. In such cases, operators may intentionally preserve duplicate packets to compare multiple observation points or perform advanced correlation analysis.

By maintaining synchronized deduplication state across distributed FEs 702, Kafka 706, and the backend 704, the architecture 700 ensures consistent, accurate, and scalable deduplication behavior across large-scale, multi-site network monitoring deployments.

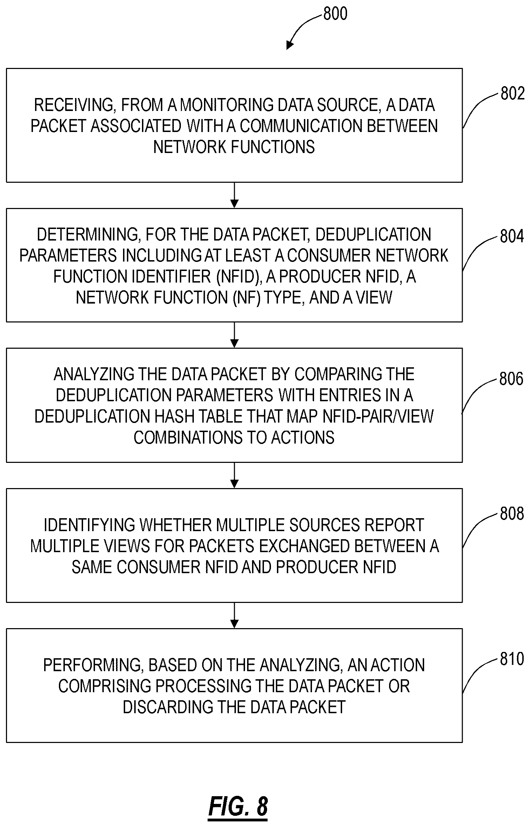

FIG. 8 is a flowchart of a process 800 for deduplicating data packets in a telecommunication network monitoring system. The process 800 contemplates implementation as a method having steps, via an apparatus with circuitry configured to implement the steps, and as a non-transitory computer-readable medium storing instructions that, when executed, cause one or more processors to implement the steps.

The process 800 includes receiving, from a monitoring data source, a data packet associated with a communication between network functions (step 802); determining, for the data packet, deduplication parameters including at least a consumer Network Function identifier (NFID), a producer NFID, a Network Function (NF) type, and a view (step 804); analyzing the data packet by comparing the deduplication parameters with entries in a deduplication hash table that map NFID-pair/view combinations to actions (step 806); identifying whether multiple sources report multiple views for packets exchanged between a same consumer NFID and producer NFID (step 808); and performing, based on the analyzing, an action comprising processing the data packet or discarding the data packet (step 810).

Determining the deduplication parameters can include, when the data packet does not include a deduplication header, identifying the consumer NFID, the producer NFID, the NF type, and the view from protocol metadata. The deduplication hash table can be updated by a self-learning model when the deduplication parameters of the data packet are not present in the deduplication hash table. The self-learning model can maintain an NFID table that maps NFIDs as Self or Peer with respect to a selected data source. The view can be determined using the NFID table, and the view can be consumer when the consumer NFID is Self and the producer NFID is Peer. The view can be producer when the producer NFID is Self and the consumer NFID is Peer.

Performing the action can include discarding packets associated with a first view for a given NFID pair based on a default prioritization of a second view. The process 800 can further include receiving, in the data packet, a deduplication header comprising metadata specifying at least the consumer NFID, the producer NFID, the NF type, and the view. The deduplication header can include a direction flag, a proxy flag, or a compact NF index, and the process 800 can further include resolving the compact NF index to a full NFID using a periodically received NF mapping update. The process 800 can further include configuring a GET_ALL directive for specified NF-type combinations such that all views of the data packet, including duplicates, are retained.

The monitoring data source can be a virtual tap, a packet streaming source, or a mirror-based monitoring system. The deduplication hash table can further associate each NFID-pair/view entry with a last-seen timestamp and dynamically ages entries after a timeout period to maintain up-to-date deduplication state. Determining the view further can include parsing a 3GPP-SBI-NF-Peer-Info field to identify whether the packet corresponds to a request or a response message. The process 800 can further include transmitting deduplication rules from the backend to the monitoring data sources to enable pre-filtering of duplicate packets at the point of capture. Deduplication pre-filtering can be selectively disabled for a specified NFID or data source to support debugging or live-analysis sessions that retain duplicate packets.

In further embodiments, the deduplication framework may be implemented as a multi-phase, self-learning architecture that progressively extends deduplication capability across distributed components of a telecommunication monitoring environment.

In one embodiment, the deduplication algorithm is deployed through a phased approach that evolves from localized deduplication toward fully distributed orchestration across multiple frontends and data sources.
(1) During a first phase, the deduplication logic operates within a single frontend (FE) probe, learning the relationship between monitored Network Functions (NFs) and performing deduplication across packet streaming and virtual tap (vTap) sources.
(2) In a second phase, the deduplication state is synchronized across multiple frontends by means of a centralized backend, referred to herein as the Network Backend Entity (NBE). Each FE may query the NBE at startup to obtain the current deduplication hash table and may propagate updates through a Kafka-based synchronization bus.
(3) A third phase introduces a lightweight deduplication header embedded in vTap and packet streaming feeds. This header provides explicit deduplication parameters, eliminating the need for deep packet inspection or HTTP/2 reassembly.
(4) A fourth phase enables the deduplication engine to push filtering rules back to the data sources themselves, allowing the sources to implement pre-filtering logic at the point of capture, thereby reducing network load and compute utilization downstream.

In certain embodiments, the vTap or packet streaming source appends a deduplication header to each packet or message. The header may include fields such as:
- a source NF Instance Identifier (NFID);
- a destination NF Instance Identifier (NFID);
- an NF Type (e.g., AMF, SMF, PCF, SCP, SEPP, NRF, etc.);
- a view indicator (Consumer, Producer, Proxy-Ingress, Proxy-Egress, Mirror, or Both);
- a direction flag (Transmit or Receive); and
- an optional proxy flag indicating whether the packet originated from or traversed a proxy function.

In some implementations, compact NF identifiers are used instead of full UUIDs. A periodic NF mapping message may associate each short NF index (e.g., 2 bytes) with its full NF instance identifier. This periodic mapping update allows the deduplication framework to maintain synchronization across distributed components while minimizing bandwidth overhead.

In another embodiment, the deduplication framework employs an adaptive self-learning algorithm that continuously refines its understanding of the monitored network topology and NF relationships. When a previously unseen pair of consumer and producer NFIDs is encountered, the system automatically generates reciprocal rules in a deduplication hash table-one to "Process" packets and another to "Discard" the corresponding reverse combination-thereby ensuring directional consistency.

Where both NFIDs appear to belong to the same data source, the system may initially classify the pair as tentative, pending further confirmation through additional packet observations. The classification is resolved based on observed traffic patterns or timeout conditions.

This adaptive process allows the system to autonomously identify "Self" and "Peer" NFs for each data source, determine the appropriate view (consumer, producer, or proxy), and update deduplication policies accordingly.

The self-learning deduplication engine may further be controlled through configuration directives, including:
- DEDUP_DEFAULT_VIEW_PRIORITY_LIST defining the default prioritization of views (e.g., [Consumer, Producer, Proxy-Ingress, Proxy-Egress, Proxy, Mirror]);
- DEDUP_OVERRIDE_NF_TYPE_PAIR_PRIORITY identifying specific NF type pairs for which a non-default view should be prioritized; and
- DEDUP_NF_TYPE_PAIR_GETALL_LIST identifying NF type pairs for which all available views are to be preserved irrespective of duplication.

These directive-driven controls allow fine-grained tuning of the deduplication policy while maintaining self-learning operation with minimal configuration.

In distributed deployments, deduplication rules and state may be maintained coherently across multiple network monitoring components. The deduplication hash table is persistently stored at the centralized backend and replicated to all edge components. Updates to the table, whether generated by self-learning operations or configuration changes, are propagated through a Kafka-based publish-subscribe bus following the same mechanism used for other system-wide policy updates such as tracing or allowlist synchronization.

The backend may expose a deduplication state API that allows each FE to retrieve the latest rule set at startup and to post incremental updates during operation. This distributed synchronization ensures consistent deduplication behavior across geographically separated network monitoring sites.

The phased deduplication system provides measurable improvements in computational efficiency and network resource utilization. By applying deduplication early in the packet processing pipeline, redundant traffic is discarded before reaching downstream stages such as correlation, enrichment, and event encoding.

Empirical analysis shows that local deduplication reduces compute utilization by approximately thirty percent (30%) for Service-Based Interface (SBI) probes and, once the learning phase completes, introduces less than ten percent (10%) processing overhead relative to clean non-duplicated traffic. When combined with distributed deduplication synchronization, overall system resource consumption-including CPU, RAM, and storage-can be reduced by approximately fifty percent (50%) relative to mirrored-only monitoring systems.

In further embodiments, the deduplication framework may extend control beyond the monitoring probes to the packet capture sources themselves. The deduplication backend can transmit filtering directives to compatible vTap or packet streaming components. These sources may apply the deduplication rules locally to prevent duplicate packets from being forwarded into the monitoring network.

This source-level orchestration minimizes network bandwidth usage, reduces redundant Kafka traffic, and further lowers compute demands at both the edge and backend.
The system may also support override configurations that selectively disable deduplication for specific NF instances or data sources, such as for debugging, testing, or correlation validation. In such cases, all duplicate views are retained as part of a live analysis session.

By integrating these additional capabilities, the disclosed framework delivers a self-optimizing, distributed deduplication system that autonomously learns NF relationships, adapts to network topology changes, and extends deduplication intelligence to the data sources themselves.

The resulting system provides improved scalability, reduced resource consumption, and enhanced accuracy in network monitoring and analytics across 5G and cloud-native service-based architectures.

### Processing circuitry and non-transitory computer-readable medium

It will be appreciated by those skilled in the art that embodiments of the present disclosure may be implemented using various forms of processing circuitry. Such processing circuitry may include, without limitation, general-purpose microprocessors, central processing units (CPUs), digital signal processors (DSPs), specialized processors such as network processors (NPs) or network processing units (NPUs), graphics processing units (GPUs), field-programmable gate arrays (FPGAs), programmable logic devices (PLDs), tensor processing units (TPUs), or similar devices. The processing circuitry may operate under the control of program instructions (software and/or firmware) stored in associated memory to execute, alone or in combination with non-processor circuits, some or all of the functionalities described herein. In alternative embodiments, these functions may be performed by state machines without stored program instructions, or by one or more application-specific integrated circuits (ASICs), in which each function or a set of functions is realized through dedicated logic or circuit designs. Hybrid approaches that combine software-driven processors, programmable logic, and/or dedicated hardware are likewise contemplated. In certain instances, a hardware device, with or without integrated software or firmware, may be referred to as circuitry, logic, or circuits "configured to" or "adapted to" carry out the operations, steps, methods, processes, algorithms, functions, or techniques described herein.

Further embodiments may include a non-transitory computer-readable storage medium storing computer-executable instructions for programming a computer, server, appliance, device, module, processor, or circuit (collectively, a "system") incorporating processing circuitry. When executed, these instructions cause the system to perform the functionalities as described and claimed in this disclosure. The non-transitory computer-readable storage medium may include, by way of example, magnetic storage devices, optical storage devices, hard disks, read-only memory (ROM), programmable read-only memory (PROM), erasable programmable read-only memory (EPROM), electrically erasable programmable read-only memory (EEPROM), flash memory, or any suitable combination thereof. The software, once stored on such a medium, comprises executable instructions that, when executed by one or more processors or programmable circuitry, direct the system to perform the operations, steps, methods, processes, algorithms, functions, or techniques of the various embodiments disclosed herein.

### Conclusion

In this disclosure, including the claims, the phrases "at least one of" or "one or more of," when referring to a list of items, encompass any individual item as well as any combination of the listed items. For example, the expressions "at least one of A, B, or C," "at least one of A, B, and C," "one or more of A, B, or C," and "one or more of A, B, and C" cover the possibilities of only A, only B, only C, any combination of two of A, B, and C, or all three (A, B, and C). The terms "comprise," "comprises," "comprising," "include," "includes," and "including" are intended to be open-ended and non-limiting, specifying essential elements or steps without excluding additional elements or steps, even where multiple such terms appear in a claim.

The drawings, descriptions, and examples provided herein are intended for purposes of illustration and explanation, and are not to be construed as limiting. Modifications, substitutions, or rearrangements may be made without departing from the spirit and scope of the disclosure. Although certain steps, operations, instructions, blocks, or similar elements (collectively, "steps") are depicted or described in a particular order, such order is not required unless explicitly stated, nor does it imply that all steps are essential. Additional steps may be performed before, after, concurrently with, or interleaved among the illustrated or described steps. Parallel execution, multitasking, and other concurrent techniques are also contemplated. Further, the division of system components or functions as described should not be viewed as mandatory; such components or functions may be combined into a single entity or distributed across multiple entities.

While the disclosure has been described through reference to particular embodiments and examples, those skilled in the art will appreciate that variations, modifications, and alternative implementations may provide equivalent functionality or comparable results. Such alternatives, even if not explicitly set forth herein, fall within the scope of the disclosure if they achieve the objectives and adhere to its underlying principles. Accordingly, the present disclosure encompasses combinations, permutations, and arrangements of the described elements, operations, methods, processes, algorithms, functions, techniques, modules, and circuits, whether implemented collectively, separately, or in subsets.

## Claims

1. A method (800) for deduplicating data packets in a telecommunication network monitoring system, the method comprising:
receiving (802), from a monitoring data source (110), a data packet associated with a communication between network functions;
determining (804), for the data packet, a set of deduplication parameters including at least a consumer Network Function identifier, NFID, a producer NFID, a Network Function, NF, type, and a view;
analyzing (806) the data packet by comparing the deduplication parameters with entries in a deduplication hash table (150) that map NFID-pair/view combinations to actions;
identifying (808) whether multiple sources report multiple views for packets exchanged between a same consumer NFID and producer NFID; and
performing (810), based on the analyzing, an action comprising processing the data packet or discarding the data packet.

2. The method (800) according to claim 1, wherein determining (804) the deduplication parameters comprises, when the data packet does not include a deduplication header, identifying the consumer NFID, the producer NFID, the NF type, and the view from protocol metadata.

3. The method (800) according to claim 1, wherein the deduplication hash table (150) is updated by a self-learning model when the deduplication parameters of the data packet are not present in the deduplication hash table (150).

4. The method (800) according to claim 3, wherein the self-learning model maintains an NFID table that maps NFIDs as Self or Peer with respect to a selected data source (110).

5. The method (800) according to claim 4, wherein the view is determined using the NFID table, and the view is a consumer view when the consumer NFID is Self and the producer NFID is Peer.

6. The method (800) according to claim 4, wherein the view is determined using the NFID table, and the view is a producer view when the producer NFID is Self and the consumer NFID is Peer.

7. The method (800) according to claim 1, wherein performing (810) the action comprises discarding packets associated with a first view for a given NFID pair based on a default prioritization of a second view.

8. The method (800) according to claim 1, further comprising receiving, in the data packet, a deduplication header comprising metadata specifying at least the consumer NFID, the producer NFID, the NF type, and the view.

9. The method (800) according to claim 8, wherein the deduplication header further comprises a direction flag, a proxy flag, or a compact NF index, and wherein the method further comprises resolving the compact NF index to a full NFID using a periodically received NF-mapping update.

10. The method (800) according to claim 1, further comprising configuring a GET_ALL directive for specified NF-type combinations such that all views of the data packet, including duplicates, are retained.

11. The method (800) according to claim 1, wherein the monitoring data source (110) is a virtual tap, a packet streaming source, or a mirror-based monitoring system.

12. The method (800) according to claim 1, wherein the deduplication hash table (150) further associates each NFID-pair/view entry with a last-seen timestamp and dynamically ages entries after a timeout period to maintain up-to-date deduplication state.

13. The method (800) according to claim 1, wherein determining (804) the view further comprises parsing a 3GPP-SBI-NF-Peer-Info field to identify whether the packet corresponds to a request or a response message.

14. The method (800) according to claim 1, further comprising transmitting deduplication rules from a backend to the monitoring data sources (110) to enable pre-filtering of duplicate packets at a point of capture.

15. A system (100) comprising one or more processors and a memory storing instructions, the processors being configured to carry out the steps of the method (800) according to any one of the preceding claims.
